# FASCICULE DE BREVET EUROPEEN

(11) **EP 1 568 542 B1**
(45) Date de publication et mention de la délivrance du brevet: **29.04.2009**
(21) Numéro de dépôt: 05300138.4
(22) Date de dépôt: 22.02.2005
(51) Int. Cl.: B60R 9/06, B60R 9/10

(54) **Porte-vélo(s) comportant une partie apte à être repliée transversalement**
Fahradhalter mit einem Querfaltteil
Bicycle carrier comprising a transversally foldable part

(30) Priorité: 26.02.2004 FR 0450361
(43) Date de publication de la demande: 31.08.2005
(73) Titulaire: Renault, 92109 Boulogne Billancourt (FR)
(72) Inventeur: Calvez, Jean-Louis, 91410, Dourdan (FR); Premartin, Arnaud, 92120, Montrouge (FR); Saillard, Patrick, 75018, Paris (FR)

(56) Documents cités:
- DE-A1- 4 407 477
- DE-A1- 10 144 550
- DE-U- 9 110 409
- FR-A- 2 430 873

## Description

L'invention propose un porte-vélo(s) pour le transport d'au moins un vélo à l'arrière d'un véhicule, que l'on peut replier transversalement lorsqu'il n'est pas utilisé.

L'invention propose plus particulièrement un porte-vélo(s) pour fixer au moins un vélo à l'arrière d'un véhicule automobile, avec son cadre s'étendant selon une orientation globalement verticale transversale, du type comportant une structure de support qui est fixée au véhicule, qui comporte deux bras longitudinaux inférieurs répartis de part et d'autre d'un plan longitudinal vertical médian de la structure de support et qui délimitent l'encombrement transversal général de la structure de support, et des moyens de solidarisation du vélo à la structure de support, qui comportent notamment un support inférieur associé à chaque roue du vélo qui est monté sur l'un des bras longitudinaux inférieurs et qui délimite un logement ouvert dans sa partie supérieure et qui reçoit une portion inférieure de la roue associée.

Parmi les moyens pour fixer un ou plusieurs vélos à l'extérieur d'un véhicule, on connaît les dispositifs appelés porte-vélo(s) que l'on monte sur le toit du véhicule, et les porte-vélo(s) que l'on monte à l'arrière du véhicule.

Les porte-vélo(s) que l'on monte à l'arrière d'un véhicule automobile comportent principalement une structure de support qui consiste en un assemblage de tronçons de profilé, et des moyens pour fixer un ou plusieurs vélos à la structure de support.

La structure de support comporte un premier ensemble de tronçons de profilé qui s'étendent dans un plan horizontal, et qui portent des supports qui reçoivent chacun une partie d'une roue d'un vélo.

La structure de support comporte aussi un deuxième ensemble de tronçons de profilé qui s'étendent dans un plan vertical transversal situé à l'arrière du véhicule, et qui portent des moyens pour relier le cadre de chaque vélo à la structure de support.

La structure de support occupe ainsi un volume particulièrement important car ses dimensions doivent être adaptées aux dimensions des vélos qu'elle doit supporter.

Ainsi, après son utilisation pour le transport de vélos, le porte-vélo(s) est généralement désolidarisé de l'arrière du véhicule pour être rangé soit dans un garage, soit dans le compartiment arrière à bagages du véhicule.

Cependant, du fait de dimensions importantes du porte-vélo(s), son rangement dans le compartiment à bagages du véhicule est parfois impossible.

Il a déjà été proposé notamment dans le document US-A-6.491.195, de réaliser une structure de support démontable en plusieurs éléments, dont l'encombrement de chacun est réduit par rapport à celui de la structure de support.

Cependant, les éléments de la structure de support conservent toujours le même encombrement transversal qui est globalement égal à la longueur du vélo.

Ainsi, il est toujours difficile de ranger la structure de support dans le compartiment à bagages du véhicule.

Le document DE-A-4407477 décrit un porte-vélo(s) pour lequel chaque support inférieur est monté pivotant par rapport au bras longitudinal sur lequel il est monté. De plus, le porte-vélo(s) comporte deux bras longitudinaux supplémentaires pour bloquer les supports en position déployée et en position repliée.

L'invention a pour but de proposer un porte-vélo(s) qui comporte une structure de support dont il est possible de réduire au moins son encombrement transversal, pour permettre de ranger le porte-vélo(s) au moins à l'intérieur du compartiment à bagages arrière du véhicule.

Dans ce but, l'invention propose un porte-vélo(s) du type décrit précédemment, caractérisé en ce que au moins une partie de chaque support est mobile par rapport au bras longitudinal associé, entre une position déployée dans laquelle le support est apte à recevoir une portion de la roue associée du vélo et dans laquelle ladite partie mobile du support fait saillie transversalement par rapport au bras longitudinal associé vers l'extérieur de la structure de support et une position repliée de rangement, dans laquelle ladite partie mobile du support s'étend transversalement entre les deux bras longitudinaux.

Selon d'autres caractéristiques de l'invention
- chaque support comporte un socle qui est fixé au bras longitudinal associé et en ce que la partie mobile est un élément transversal mobile qui délimite au moins en partie le logement et qui est monté mobile par rapport au socle ;
- la partie mobile s'étend dans un plan globalement horizontal lorsque le support est en position déployée et/ou en position repliée ;
- la partie mobile est montée articulée par rapport au socle autour d'un axe d'orientation principale longitudinale ;
- le socle comporte des moyens pour maintenir la partie mobile en position déployée du support ;
- les moyens de maintien comportent au moins une patte qui s'étend verticalement vers le haut depuis une face horizontale supérieure du socle, et dont une face verticale transversale comporte une rainure d'orientation principale transversale qui est apte à recevoir une partie complémentaire de la partie mobile pour son maintien en position ;
- la patte est disposée transversalement sur le socle à distance de l'axe d'articulation de la partie mobile ;
- la partie mobile consiste en un arceau qui est monté articulé par rapport au socle au niveau de ses extrémités ;
- chaque extrémité de l'arceau est prolongée par un doigt longitudinal coaxial à l'axe d'articulation de l'arceau par rapport au socle qui est reçu dans un trou complémentaire d'une patte de support qui s'étend verticalement vers le haut depuis la face horizontale supérieure du socle, pour réaliser l'articulation de l'arceau par rapport au socle ;
- les supports définissent une surface plane globalement horizontale lorsqu'ils sont en position repliée de rangement ;
- le socle comporte une gorge qui débouche dans la face horizontale supérieure du socle et dans une face longitudinale verticale d'extrémité externe du socle et qui délimite en partie le logement.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective d'un porte-vélo(s) comportant des supports conformes à l'invention ;
- la figure 2 est un détail d'un support représenté en position repliée ;
- la figure 3 est une vue similaire à celle de la figure 2, dans laquelle le support est en position dépliée ;
- la figure 4 est une vue en bout de derrière du porte-vélo(s) dans laquelle les supports sont en position dépliée pour que le porte-vélo(s) puisse recevoir un vélo;
- la figure 5 est une vue similaire à celle de la figure 4, dans laquelle les supports sont en position repliée, montrant la réduction de l'encombrement transversal du porte-vélo(s).

Pour la description de l'invention, on adoptera à titre non limitatif les orientations verticale, longitudinale et transversale selon le repère V, L, T indiqué aux figures.

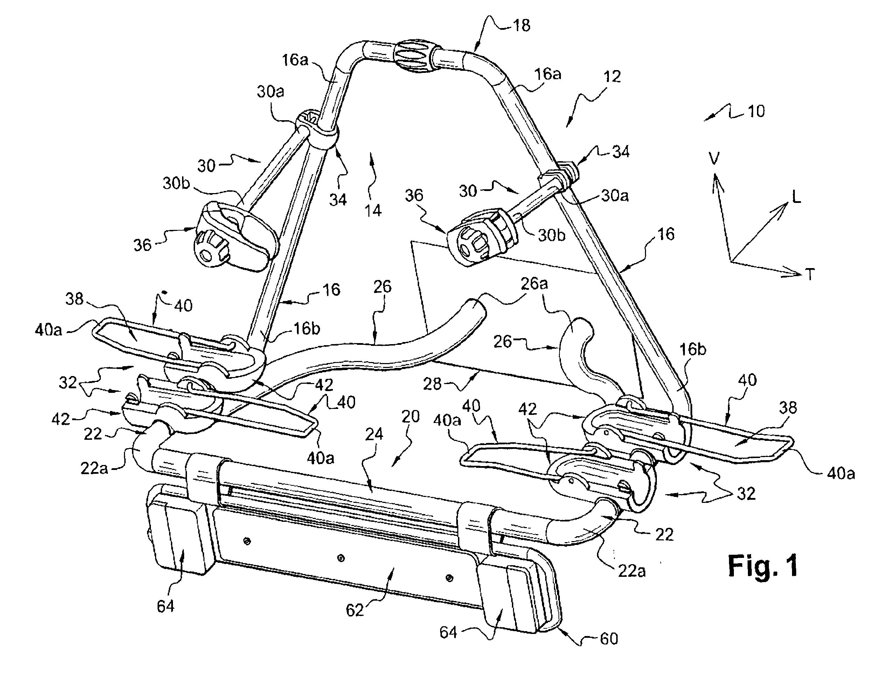

On adoptera aussi l'orientation d'arrière en avant comme étant la direction longitudinale et de gauche à droite en se reportant à la figure 1.

Dans la description qui va suivre, des éléments identiques, similaires ou analogues seront désignés par les mêmes chiffres de référence.

On a représenté à la figure 1 un porte-vélo(s) 10 permettant de monter plusieurs vélos, ici deux vélos, à l'arrière d'un véhicule automobile (non représenté), de manière que le cadre de chaque vélo s'étende dans un plan vertical transversal lorsqu'il est en position montée sur le porte-vélo(s).

Le porte-vélo(s) 10 comporte une structure de support 12 qui est fixée au véhicule, et qui est constituée d'un assemblage de tronçons de profilé, et il comporte des moyens pour solidariser chaque vélo à la structure de support 12.

La structure de support 12 comporte ainsi un arceau vertical avant 14, globalement en forme de trapèze s'étendant dans un plan vertical transversal, qui est constitué de deux montants 16 inclinés par rapport à la verticale et dont les extrémité supérieures 16a sont reliées entre-elles par un tronçon de raccordement transversal 18.

La structure de support 12 comporte aussi un cadre inférieur 20 de support, qui s'étend horizontalement et vers l'arrière depuis l'arceau vertical 14, et qui comporte deux bras longitudinaux 22 s'étendant chacun vers l'arrière depuis l'extrémité inférieure 16b d'un montant 16 associé et dont les extrémités longitudinales arrière 22a des deux bras longitudinaux 22 sont reliées entre-elles par une traverse arrière 24.

Enfin, la structure de support 12 comporte des pattes d'ancrage 26 qui s'étendent globalement longitudinalement vers l'avant depuis les bras longitudinaux, en avant par rapport à l'arceau avant 14, et dont les extrémités avant libres 26a coopèrent avec des moyens de fixation complémentaires 28, que l'on a représenté de manière simplifiée par un rectangle, et qui sont portés par un élément de structure du véhicule automobile (non représenté).

Puisque le porte-vélo(s) 10 s'étend en arrière du véhicule, il masque notamment les feux de signalisation arrière et la plaque minéralogique arrière du véhicule (non représentés).

Le porte-vélo(s) 10 porte donc une plaque arrière 60 de support, qui est montée sur la traverse arrière 24, et qui porte une plaque minéralogique 62 et des feux de signalisation arrière 64 supplémentaires, remplaçant les éléments masqués, qui sont des éléments de sécurité importants.

Le porte-vélo(s) 10 comporte aussi un circuit électrique (non représenté) pour relier les feux supplémentaires 64 aux feux associés du véhicule.

Les moyens de solidarisation de chacun des vélos à la structure de support 12 comportent une barre de verrouillage 30 d'un vélo associé en position montée sur la structure de support 12 et des supports inférieurs 32, dont chacun est associé à une roue d'un vélo .

Chaque barre de verrouillage 30 s'étend globalement longitudinalement vers l'arrière depuis un montant 16 associé de l'arceau avant 14, son extrémité avant 30a est reliée au montant 16 associé par l'intermédiaire d'une bride 34, et son extrémité arrière 30b porte une pince de serrage d'un tube du cadre du vélo associé.

Chaque support inférieur 32 est monté sur un bras longitudinal 22, et il délimite un logement creux 38 ouvert vers le haut qui est apte à recevoir une portion inférieure de la roue associée.

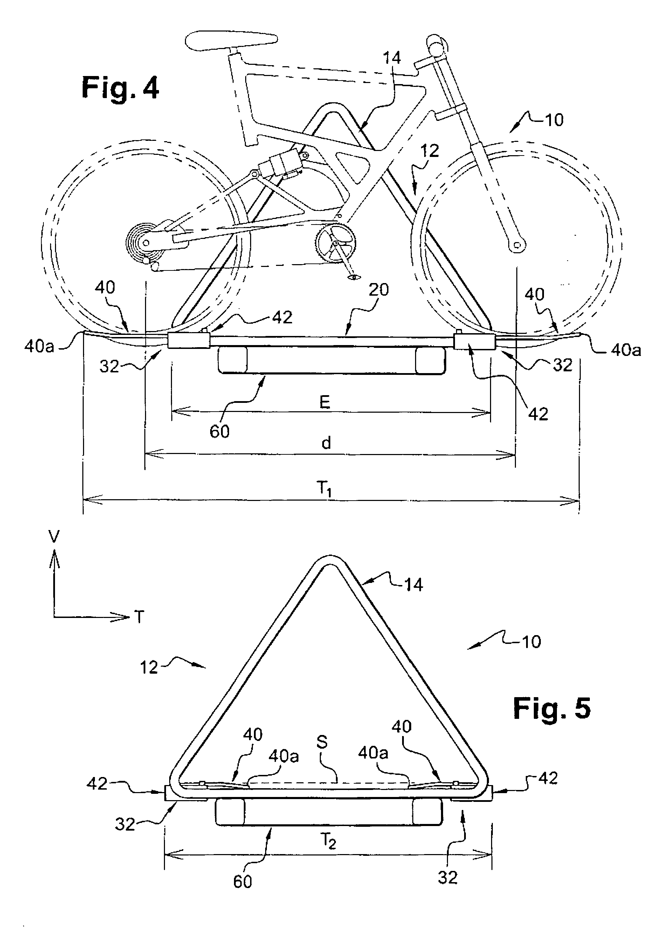

Comme on peut le voir aux figures 4 et 5, les supports inférieurs 32 sont écartés transversalement l'un de l'autre d'une distance "d" correspondant sensiblement à la distance entre les roues du vélo.

La longueur d'un vélo, et plus particulièrement d'un vélo pour adulte, est relativement importante par rapport à la largeur du véhicule. La distance "d" est alors elle aussi importante, ce qui implique que l'encombrement transversal du porte-vélo(s) 10 est important.

Le porte-vélo(s) 10 conforme à l'invention est conçu de manière que l'on peut réduire son encombrement transversal "T" lorsque aucun vélo n'est monté sur le porte-vélo(s) 10.

Pour cela, la structure de support 12 est conçue de manière que son encombrement transversal "E", qui est délimité par les bras longitudinaux 22, est inférieur à la distance "d" d'écartement des supports inférieurs 32.

Ainsi, comme on l'a représenté à la figure 4, les supports inférieurs 32 s'étendent transversalement au moins en partie à l'extérieur de la structure de support 12, en faisant saillie par rapport aux bras longitudinaux 22 et ils définissent ainsi encombrement transversal "T1" maximum du porte-vélo(s) 10.

Pour permettre la réduction de l'encombrement transversal du porte-vélo(s) 10, et conformément à l'invention, chaque support inférieur 32 comporte une partie 40 qui est mobile par rapport au bras longitudinal 22 associé entre une position déployée dans laquelle la partie mobile 40 fait saillie transversalement vers l'extérieur de la structure de support 12, et une position repliée dans laquelle la partie mobile 40 s'étend transversalement entre les deux bras longitudinaux 22.

Chacun des supports inférieurs 32 comporte aussi un socle 42 qui est fixé au bras longitudinal 22 associé, et par rapport auquel la partie mobile 40 est mobile.

Ainsi, comme on peut le voir aux figures 4 et 5, lorsque les parties mobiles 40, qui sont situées de chaque coté du porte-vélo(s) 10, sont en position déployée représentée à la figure 4, la distance entre leurs extrémités libres 40a définit l'encombrement transversal maximal "T1" du porte-vélo(s). Lorsque ces mêmes parties mobiles 40 sont en position repliée représentée à la figure 5, ce sont les socles 42 qui font saillie transversalement vers l'extérieur par rapport au bras longitudinaux 22, et ils définissent ainsi l'encombrement transversal minimal "T2" du porte-vélo(s) 10.

L'encombrement transversal minimal "T2" du porte-vélo(s) 10 dépend donc principalement de la distance entre les bras longitudinaux 22, c'est-à-dire de l'encombrement transversal "E" de la structure de support 12.

Ainsi, il est possible de définir quel sera l'encombrement transversal minimal "T2" du porte-vélo(s) 10 en déterminant la distance entre les bras longitudinaux 22, par exemple de manière que le porte-vélo 10 puisse être introduit dans le compartiment à bagages du véhicule.

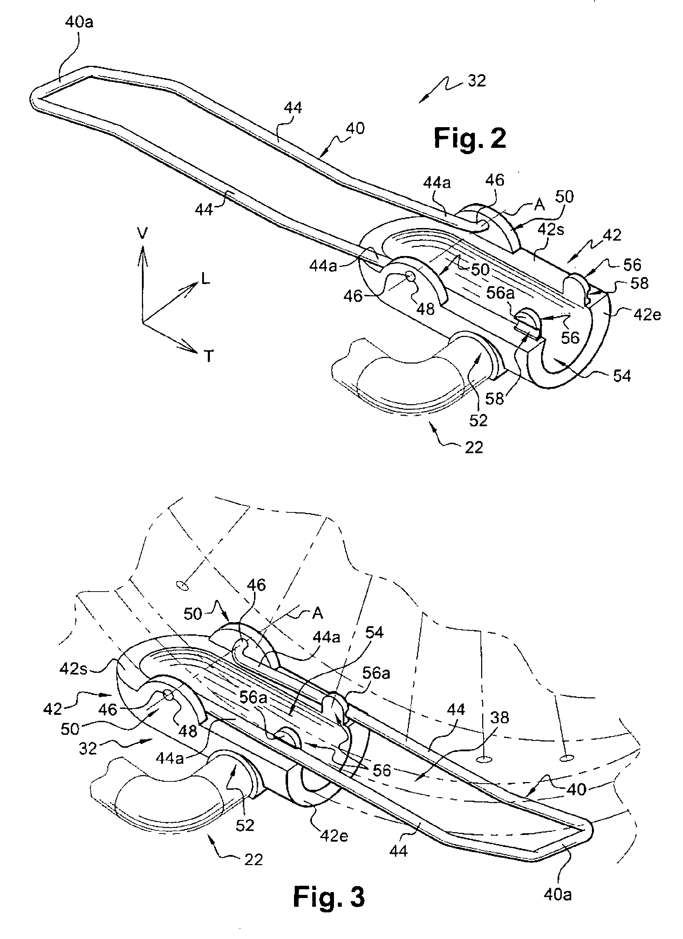

On a représenté aux figures 2 et 3 un mode de réalisation préféré d'un support inférieur 32 conforme à l'invention, selon lequel la partie mobile 40 est montée articulée par rapport au socle 42 autour d'un axe A d'orientation principale longitudinale.

Selon ce mode de réalisation, la partie mobile 40 consiste en un arceau en forme de U comportant notamment deux branches parallèles 44, dont les extrémités libres 44a comportent des moyens d'articulation de la partie mobile 40 autour de l'axe longitudinal A qui coopèrent avec des moyens d'articulation complémentaire du socle 42 associé.

L'articulation de la partie mobile 40 par rapport au socle 42 est ici réalisée par les extrémités libres 44a des branches 44 qui sont recourbées vers l'extérieur de manière qu'elles sont prolongées par un doigt longitudinal 46, coaxial à l'axe longitudinal A d'articulation.

Chaque doigt 46 est reçu dans un trou complémentaire 48 qui est réalisé dans une patte de support 50 du socle 42. Cette patte de support 50 s'étend vers le haut et dans un plan transversal vertical depuis une face supérieure horizontale 42s du socle 42.

Le socle 42 est un élément d'orientation principale transversale, il comporte une rainure inférieure longitudinale 52 qui reçoit le bras longitudinal 22 lorsque le socle est en position montée sur le bras longitudinal 22.

La rainure inférieure 52 est ouverte le long d'une génératrice inférieure pour permettre le montage du socle 42 autour du bras longitudinal 22 par un mouvement vertical descendant du socle 42 par rapport au bras longitudinal 22.

Le socle 42 comporte aussi des moyens (non représentés) pour sa solidarisation avec le bras longitudinal 22 associé, en pivotement autour de l'axe principal du bras longitudinal 22. Ces moyens de solidarisation consistent par exemple en un doigt vertical qui est reçu dans un trou complémentaire du bras longitudinal 22.

Comme on l'a dit plus haut, le support 32 délimite un logement creux 38 ouvert vers le haut et dans lequel une partie inférieure de la roue est posée.

Conformément à l'invention, le logement creux 38 est délimité en partie par le socle 42, et en partie par la partie mobile 40.

Ainsi, le logement creux 38 est délimité en partie par une gorge supérieure transversale 54 du socle 42, qui débouche dans la face supérieure horizontale 42s du socle et qui débouche dans une face longitudinale verticale d'extrémité externe 42e du socle.

Cette gorge supérieure 54 est de forme concave globalement complémentaire de la forme d'une roue du vélo.

La partie mobile 40 délimite aussi le logement creux 38 lorsqu'elle est en position déployée, en coopération avec la gorge supérieure 54 du socle 42.

A cet effet, lorsque la partie mobile 40 est en position déployée, elle s'étend dans un plan horizontal de manière que les branches 44 s'étendent transversalement vers l'extérieure en prolongeant la gorge supérieure 54.

Ainsi, la partie mobile 40 et le bord supérieur de la gorge supérieure 54 délimitent l'ouverture supérieure du logement creux 38, et seule la gorge supérieure 54 délimite le fond du logement creux 38.

Conformément à l'invention, le socle 42 comporte des moyens pour maintenir la partie mobile 40 en position déployée.

Ces moyens de maintien comportent deux pattes verticales 56 qui s'étendent verticalement vers le haut depuis la face supérieure horizontale 42s du socle 42. Ces pattes verticales 56 sont réparties symétriquement de part et d'autre d'un plan transversal vertical médian du socle 42, et elles sont agencées transversalement à distance de l'axe A longitudinal d'articulation de la partie mobile 40, c'est-à-dire ici à proximité de l'extrémité transversale externe du socle 42.

Les pattes verticales 56 comportent chacune une rainure transversale 58 réalisée dans une face transversale verticale 56a de la patte 56.

Lorsque la partie mobile 40 est en position déployée, chaque branche 44 est reçue en partie dans la rainure transversale 58 associée, réalisant de ce fait le blocage en pivotement de la partie mobile 40.

Pour permettre l'introduction d'une branche 44 dans la rainure 58 associée, les pattes verticales 56 sont déformables élastiquement de manière qu'elles s'effacent lors du mouvement de la partie mobile 40 vers sa position déployée.

Ici, les rainures 58 sont réalisées dans les faces verticales transversales externes 56a des pattes 56, c'est-à-dire que les pattes 56 sont agencées transversalement entre les branches 44 de la partie mobile 40.

Selon un autre aspect avantageux de l'invention, comme on peut le voir à la figure 5, lorsque les parties mobiles 40 de tous les supports 32 sont en position repliée, elles s'étendent toutes dans un plan horizontal de manière qu'elles définissent conjointement une surface plane S horizontale qui peut par exemple être utilisée pour le chargement d'objets encombrants à l'arrière du véhicule.

Il sera compris que l'invention n'est pas limitée au mode de réalisation qui vient d'être décrit et que les parties mobiles 40 peuvent avoir une autre structure, et qu'elles peuvent par exemple consister chacune en un tronçon de profilé ouvert vers le haut, ou bien elles peuvent être montées coulissantes transversalement par rapport au socle 42 associé.

Il sera aussi compris que des inversions mécaniques simples peuvent constituer des variantes de réalisation de l'invention. Par exemple, les rainures transversales 58 peuvent être réalisées dans les faces verticales transversales internes des pattes 56, c'est-à-dire que les pattes 56 sont agencées transversalement de part et d'autre de la partie mobile 40.

## Revendications

1. Porte-vélo (10) pour fixer au moins un vélo à l'arrière d'un véhicule automobile, avec son cadre s'étendant selon une orientation globalement verticale transversale, du type comportant une structure de support (12) qui est fixée au véhicule, qui comporte deux bras longitudinaux (22) inférieurs répartis de part et d'autre d'un plan longitudinal vertical médian de la structure de support (12) et qui délimitent l'encombrement transversal (E) général de la structure de support (12),
et des moyens de solidarisation du vélo à la structure de support (12), qui comportent notamment un support (32) inférieur associé à chaque roue du vélo qui est monté sur l'un des bras longitudinaux inférieurs (22) et qui délimite un logement (38) ouvert dans sa partie supérieure et qui reçoit une portion inférieure de la roue associée,
**caractérisé en ce que** chaque support (32) comporte un socle (42) qui est fixé au bras longitudinal (22) associé et une partie mobile (40) qui s'étend transversalement et qui délimite au moins en partie le logement (38) et qui est monté mobile par rapport au socle (42) entre :
- une position déployée dans laquelle le support (32) est apte à recevoir une portion de la roue associée du vélo et dans laquelle ladite partie mobile (40) du support (32) fait saillie transversalement par rapport au bras longitudinal (22) associé vers l'extérieur de la structure de support (12) ;
- et une position repliée de rangement, dans laquelle ladite partie mobile (40) du support (32) s'étend transversalement entre les deux bras longitudinaux (22).

2. Porte-vélo (10) selon la revendication précédente, **caractérisé en ce que** la partie mobile (40) s'étend dans un plan globalement horizontal lorsque le support (32) est en position déployée et/ou en position repliée.

3. Porte-vélo (10) selon l'une quelconque des revendications précédentes, **caractérisé en ce que** la partie mobile (40) est montée articulée par rapport au socle (42) autour d'un axe (A) d'orientation principale longitudinale.

4. Porte-vélo (10) selon l'une quelconque des revendications précédentes, **caractérisé en ce que** le socle (42) comporte des moyens (56, 58) pour maintenir la partie mobile (40) en position déployée du support (32).

5. Porte-vélo (10) selon la revendication précédente, en combinaison avec la revendication 3, **caractérisé en ce que** les moyens de maintien (56, 58) comportent au moins une patte (56) qui s'étend verticalement vers le haut depuis une face horizontale supérieure (42s) du socle (42), et dont une face verticale transversale (56a) comporte une rainure (58) d'orientation principale transversale qui est apte à recevoir une partie complémentaire (44) de la partie mobile (40) pour son maintien en position.

6. Porte-vélo (10) selon la revendication précédente, **caractérisé en ce que** la patte (56) est disposée transversalement sur le socle (42) à distance de l'axe (A) d'articulation de la partie mobile (40).

7. Porte-vélo (10) selon l'une quelconque des revendications précédentes, **caractérisé en ce que** la partie mobile (40) consiste en un arceau qui est monté articulé par rapport au socle (42) au niveau de ses extrémités (44a).

8. Porte-vélo (10) selon la revendication précédente, **caractérisé en ce que** chaque extrémité (44a) de l'arceau (40) est prolongée par un doigt longitudinal (46) coaxial à l'axe (A) d'articulation de l'arceau (40) par rapport au socle (42) qui est reçu dans un trou complémentaire (48) d'une patte de support (50) qui s'étend verticalement vers le haut depuis la face horizontale supérieure (42s) du socle (42), pour réaliser l'articulation de l'arceau (40) par rapport au socle (42).

9. Porte-vélo (10) selon l'une quelconque des revendications précédentes, **caractérisé en ce que** les supports (32) définissent une surface plane (S) globalement horizontale lorsqu'ils sont en position repliée de rangement.

10. Porte-vélo (10) selon l'une quelconque des revendications précédentes, **caractérisé en ce que** le socle (42) comporte une gorge (54) qui débouche dans la face horizontale supérieure (42s) du socle (42) et dans une face longitudinale verticale d'extrémité externe (42e) du socle (42) et qui délimite en partie le logement (38).

## Claims

1. Bicycle carrier (10) for fixing to the back of a motor vehicle at least one bicycle with its frame oriented generally vertically and transversally, of the type that comprises a bracket structure (12) which is fixed to the vehicle and comprises two lower longitudinal arms (22), distributed one on each side of a central vertical longitudinal plane of the bracket structure (12) and defining the overall transverse space requirement (E) of the bracket structure (12),
and means for securing the bicycle to the bracket structure (12) which comprise in particular a lower bracket (32) for each wheel of the bicycle, each bracket being mounted on one of the lower longitudinal arms (22) and defining an upwardly open seat (38) which receives a lower portion of the corresponding wheel,
said carrier being **characterized in that** each bracket (32) comprises a mounting part (42) fixed to the corresponding longitudinal arm (22) and, extending transversally, a movable part (40) which at least partly defines the seat (38) and which is mounted on the mounting part (42) in such a way that it can move between:
- an extended position in which the bracket (32) is able to receive a portion of the corresponding wheel of the bicycle and in which said movable part (40) of the bracket (32) projects transversally relative to the corresponding longitudinal arm (22), outwards from the bracket structure (12);
- and a folded or stowed position in which said movable part (40) of the bracket (32) extends transversally between the two longitudinal arms (22).

2. Bicycle carrier (10) according to the preceding claim, **characterized in that** the movable part (40) lies in a generally horizontal plane when the bracket (32) is in the extended and/or folded position.

3. Bicycle carrier (10) according to either of the preceding claims, **characterized in that** the movable part (40) pivots on the mounting part (42) about an axis (A) of longitudinal main orientation.

4. Bicycle carrier (10) according to any one of the preceding claims, **characterized in that** the mounting part (42) comprises means (56, 58) for locking the movable part (40) in the extended position from the bracket (32).

5. Bicycle carrier (10) according to the preceding claim, in combination with Claim 3, **characterized in that** the locking means (56, 58) comprise at least one lug (56) rising vertically from a horizontal upper face (42s) of the mounting part (42), having a transverse vertical face (56a) in which there is a groove (58) of transverse main orientation which is able to receive a complementary part (44) of the movable part (40) to lock it in position.

6. Bicycle carrier (10) according to the preceding claim, **characterized in that** the lug (56) is arranged transversally on the mounting part (42) at a distance from the pivot axis (A) of the movable part (40).

7. Bicycle carrier (10) according to any one of the preceding claims, **characterized in that** the movable part (40) consists of a hoop pivoted to the mounting part (42) via its ends (44a).

8. Bicycle carrier (10) according to the preceding claim, **characterized in that** each end (44a) of the hoop (40) is extended by a longitudinal finger (46) coaxial with the pivot axis (A) of the hoop (40) relative to the mounting part (42) and is received in a mating hole (48) in a supporting lug (50) rising vertically from the horizontal upper face (42s) of the mounting part (42), so that the hoop (40) is pivoted to the mounting part (42).

9. Bicycle carrier (10) according to any one of the preceding claims, **characterized in that** the brackets (32) define a generally horizontal plane surface (S) when they are in the folded stowed position.

10. Bicycle carrier (10) according to any one of the preceding claims, **characterized in that** the mounting part (42) comprises a groove (54) which is open to the horizontal upper face (42s) of the mounting part (42) and to an external vertical longitudinal end face (42e) of the mounting part (42) and which partly defines the seat (38).

## Patentansprüche

1. Fahrradhalter (10) zur Befestigung mindestens eines Fahrrads am hinteren Teil eines Kraftfahrzeugs, wobei sich sein Rahmen in einer allgemein vertikalen Querausrichtung erstreckt, jener Art, die eine Stützstruktur (12) aufweist, die an dem Fahrzeug befestigt ist und die zwei untere Längsarme (22) aufweist, die auf beiden Seiten einer vertikalen, mittleren Längsebene der Stützstruktur (12) verteilt sind und die die allgemeinen Querabmessungen (E) der Stützstruktur (12) begrenzen,
und Mittel zur festen Verbindung des Fahrrads mit der Stützstruktur (12), die insbesondere einen unteren Träger (32) aufweisen, der jedem Fahrradrad zugeordnet ist, das an einem der unteren Längsarme (22) angebracht ist und eine Aufnahme (38) begrenzt, die in ihrem oberen Teil offen ist und einen unteren Teil des zugehörigen Rads aufnimmt,
**dadurch gekennzeichnet, dass** jeder Träger (32) einen Fuß (42), der an dem zugehörigen Längsarm (22) befestigt ist, und einen beweglichen Teil (40) aufweist, der sich in Querrichtung erstreckt, zumindest teilweise die Aufnahme (38) begrenzt und bezüglich des Fußes (42) zwischen:
- einer entfalteten Position, in der der Träger (32) einen Teil des zugehörigen Rads des Fahrrads aufnehmen kann und in der der bewegliche Teil (40) des Trägers (32) in Querrichtung bezüglich des zugehörigen Längsarms (22) von der Stützstruktur (12) nach außen vorragt;
- und einer eingeklappten Verstauposition, in der sich der bewegliche Teil (40) des Trägers (32) in Querrichtung zwischen den beiden Längsarmen (22) erstreckt, beweglich angebracht ist.

2. Fahrradhalter (10) nach dem vorhergehenden Anspruch, **dadurch gekennzeichnet, dass** sich der bewegliche Teil (40) in einer allgemein horizontalen Ebene erstreckt, wenn sich der Träger (32) in einer entfalteten und/oder eingeklappten Position befindet.

3. Fahrradhalter (10) nach einem der vorhergehenden Ansprüche, **dadurch gekennzeichnet, dass** der bewegliche Teil (40) bezüglich des Fußes (42) gelenkig um eine Achse (A) mit einer längs verlaufenden Hauptausrichtung angebracht ist.

4. Fahrradhalter (10) nach einem der vorhergehenden Ansprüche, **dadurch gekennzeichnet, dass** der Fuß (42) Mittel (56, 58) zum Halten des beweglichen Teils (40) in der entfalteten Position des Trägers (32) aufweist.

5. Fahrradhalter (10) nach dem vorhergehenden Anspruch in Kombination mit Anspruch 3, **dadurch gekennzeichnet, dass** die Haltemittel (56, 58) mindestens einen Ansatz (56) aufweisen, der sich von einer horizontalen Oberseite (42s) des Fußes (42) vertikal nach oben erstreckt und von dem eine vertikale Querfläche (56a) eine in erster Linie in Querrichtung ausgerichtete Nut (58) aufweist, die einen komplementären Teil (44) des beweglichen Teils (40) aufnehmen kann, um ihn in Position zu halten.

6. Fahrradhalter (10) nach dem vorhergehenden Anspruch, **dadurch gekennzeichnet, dass** der Ansatz (56) quer auf dem Fuß (42) in einem Abstand von der Gelenkachse (A) des beweglichen Teils (40) angeordnet ist.

7. Fahrradhalter (10) nach einem der vorhergehenden Ansprüche, **dadurch gekennzeichnet, dass** der bewegliche Teil (40) aus einem Bügel besteht, der an seinen Enden (44a) gelenkig bezüglich des Fußes (42) angelenkt ist.

8. Fahrradhalter (10) nach dem vorhergehenden Anspruch, **dadurch gekennzeichnet, dass** jedes Ende (44a) des Bügels (40) durch einen zur Gelenkachse (A) des Bügels (40) bezüglich des Fußes (42) koaxialen Längsfinger (46) verlängert ist, der in einem komplementären Loch (48) eines Stützansatzes (50), der sich von der horizontalen Oberseite (42s) des Fußes (42) vertikal nach oben erstreckt, aufgenommen wird, um die Anlenkung des Bogens (40) bezüglich des Fußes (42) zu realisieren.

9. Fahrradhalter (10) nach einem der vorhergehenden Ansprüche, **dadurch gekennzeichnet, dass** die Träger (32) eine allgemein horizontal ebene Fläche (S) definieren, wenn sie sich in einer eingeklappten Verstauposition befinden.

10. Fahrradhalter (10) nach einem der vorhergehenden Ansprüche, **dadurch gekennzeichnet, dass** der Fuß (42) einen Kanal (54) aufweist, der in der horizontalen Oberseite (42s) des Fußes (42) und in einer vertikalen Längsfläche des äußeren Endes (42e) des Fußes (42) mündet und die Aufnahme (38) teilweise begrenzt.
